(19) **Europäisches Patentamt**

**European Patent Office**

**Office européen des brevets**

(11) Veröffentlichungsnummer: **0 282 621**
**B1**

(12) **EUROPÄISCHE PATENTSCHRIFT**

(45) Veröffentlichungstag der Patentschrift:
25.04.90

(21) Anmeldenummer: 87104058.0

(22) Anmeldetag: 19.03.87

(51) Int. Cl.⁴: **C02F 11/00, B03B 9/00,
B01D 21/00**

(54) Verfahren und Vorrichtung zum Entschlammen von Gewässern.

(43) Veröffentlichungstag der Anmeldung:
21.09.88 Patentblatt 88/38

(45) Bekanntmachung des Hinweises auf die Patenterteilung:
25.04.90 Patentblatt 90/17

(84) Benannte Vertragsstaaten:
AT BE CH DE IT LI NL SE

(56) Entgegenhaltungen:
EP-A- 0 152 846

ERZMETALL, Band 30, Nr. 11, November 1977,
Seiten 497-504, Weinheim, DE; W. JACOBS et al.: "Die
Indirekte Eisenerzflotation - über Erfahrungen aus Pilot-
und Betriebsanlagen"

(73) Patentinhaber: Kreyenberg, Heiner, Dipl.-Ing.,
Waldseestrasse 31, D-4030 Ratingen 4(DE)

(72) Erfinder: Kreyenberg, Heiner, Dipl.-Ing.,
Waldseestrasse 31, D-4030 Ratingen 4(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

## Beschreibung

Die Erfindung betrifft ein Verfahren zum Entschlammen von Gewässern, bei dem die im Schlamm enthaltenen anorganischen (Steine, Kies, Sand, etc.) und organischen (Holz, Wurzeln etc.) Bestandteile voneinander separiert werden, wobei zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden und wobei anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden, wobei schließlich in einer dritten Stufe die anorganische und organische Trübe der dann übriggebliebenen Bestandteile entwässert und dabei der gewonnene Dickschlamm und das Ablaufwasser weiterverarbeitet bzw. abgeführt werden. Weiterhin betrifft die Erfindung eine Anlage zur Durchführung des Verfahrens. Das Verfahren und die Anlage sind gleichermaßen für die Aufbereitung von Faulschlammsedimenten geeignet.

Bei der Entschlammung von Gewässern fallen eine Vielzahl von Stoffen an, die grob in anorganische und organische Bestandteile unterteilt werden können. Bei den anorganischen Bestandteilen handelt es sich vor allem um Steine, Kies, Sand etc., während die organischen Bestandteile unter anderem Holz und Wurzeln umfassen. Zu diesen organischen Bestandteilen müssen auch Öle gezählt werden, die in die Gewässer geleitet wurden und diese verschmutzen. Daneben gibt es noch chemische Verunreinigungen, beispielsweise die Einleitung von Phosphaten in die Gewässer, die sich in dem Wasser lösen.

Ziel bei der Entschlammung von Gewässern ist es, diese von diesen anorganischen und organischen Bestandteilen zu befreien. Allerdings besteht ein großes Problem darin, was mit diesen Bestandteilen geschehen soll, wenn sie aus dem Gewässer entfernt worden sind. Da Deponieräume immer rarer werden, muß eine Zielsetzung bei der Entschlammung von Gewässern darin liegen, die anorganischen und organischen Bestandteile, also Steine, Kies, Sand, Holz, Wurzeln etc. zu gewinnen und als verwertbares Wirtschaftsgut weiterzuverwenden. Nur noch ein Bruchteil davon soll der Deponierung zugeführt werden.

In der deutschen Patentmeldung P 36 20 700.4 wird ein Verfahren sowie eine Vorrichtung zum Entschlammen von Gewässern beschrieben, die die bekannten Verfahren und Vorrichtungen so verbessern, daß bei der Gewässerentschlammung nur noch geringe Mengen zu deponieren sind und wobei die nicht deponierten Bestandteile des Schlamms als verwertbare Wirtschaftsgüter der Weiterverwertung zugeführt werden können. Das bekannte Verfahren zum Entschlammen von Gewässern, bei dem die im Schlamm enthaltenen anorganischen (Steine, Kies, Sand etc.) und organischen (Holz, Wurzeln, etc.) Bestandteile voneinander separiert werden, besteht aus insgesamt drei Verfahrensstufen. Zunächst werden in einer ersten Stufe aus dem Schlamm die Bestandteile oberhalb einer bestimmten Größe getrennt nach anorganischen und organischen Bestandteilen ausgesondert, gereinigt und anschließend der Weiterverwertung zugeführt. In einer zweiten Stufe werden anschließend aus den verbliebenen Bestandteilen oberhalb einer Mindestgröße die anorganischen Bestandteile ausgesondert, gereinigt und ebenfalls dfer Weiterverwertung zugeführt. In einer dritten Stufe schließlich wird die anorganische und organische Trübe der dann übrig gebliebenen Bestandteile entwässert. Der dabei gewonnene Dickschlamm und das Ablaufwasser werden anschließend weiterverarbeitet bzw. abgeführt.

Bei diesem bekannten Verfahren für Gewässerentschlammung ist von Nachteil, daß in der zweiten Stufe die feinen anorganischen, d.h. mineralischen Bestandteile nur sehr schlecht von den feinen organischen Bestandteilen getrennt werden können. In der in dieser zweiten Stufe verwendeten Zyklonanlage mit Sortierer ist die Dichte der feinen Bestandteile zu gering, als daß eine einwandfreie Sortierung und Abscheidung der anorganischen Bestandteile möglich ist. Die Zyklonanlage soll zwar die anorganischen Bestandteile ober halb einer Größe von 0,063 mm abtrennen und beispielsweise einem Sandlager zuführen, während die anorganischen Bestandteile, die kleiner als 0,063 mm sind, der dritten Stufe zugeführt werden, doch treibt das Aufströmwasser im Zyklon aus dem Düsenboden die leichten anorganischen Bestandteile zum Überlauf, so daß nachteiligerweise auch Sandteile mit herausgerissen und der dritten Stufe zugeführt werden. Dies läßt sich ohne genaue Dichtetrennung nicht vermeiden, was aber mit einem Zyklon nicht möglich ist. Die relativ großen Sandteile werden in der dritten Stufe somit mit dem Trübwasser ausgetragen. Außerdem gelangen erosive Sande partiell in die Entwässerungsmaschine in Form einer Zentrifuge der dritten Stufe und rufen dort Verschleißerscheinungen hervor. Außerdem kommen Sande, die dem Grunde nach wirtschaftlich verwertbar sind, zum Abfall.

Ein weiterer Nachteil ist folgender. Bei einer massenmäßigen Überbeschickung der Zyklonanlage erfolgt keine Fraktionierung mehr. Vielmehr wird das Material aus Unter- und Überlauf ohne Fraktionierung mit dem Überlaufwasser herausgespült und einem Vorlagebecken, das der Entwässerungsmaschine der dritten Stufe vorgeschaltet ist, zugeführt. Die Folge davon ist, daß das Vorlagebecken allmählich verlandet. Außerdem gelangen wiederum erosive Sande partielle in die Entwässerungsmaschine der dritten Stufe und rufen dort Verschleißerscheinungen hervor.

Davon ausgehend liegt der Erfindung die Aufgabe zugrunde, bei dem bekannten Verfahren zum Entschlammen von Gewässern die nach der zweiten Stufe auftretenden Nachteile zu beseitigen; weiterhin soll eine Anlage zur Durchführung des Verfahrens geschaffen werden.

Als technische Lösung wird mit der Erfindung vorgeschlagen, daß die zwischen der zwischen der zweiten und der dritten Stufe anfallende anorganische und organische Trübe eingedickt wird, wobei die leichten und nicht eingedickten organischen Bestandteile der Trübe gegebenenfalls unter Zwischenlagerung direkt der dritten Stufe zugeführt werden, während die eingedickten Bestandteile der Trübe anderweitig weiterbehandelt werden.

Durch die Eindickung der nach der zweiten Stufe anfallenden anorganischen und organischen Trübe wird eine Möglichkeit geschaffen, daß die so eingedickten Bestandteile und dabei insbesondere die Sande nicht der bisherigen dritten Stufe zugeführt werden müssen, sondern daß durch die Eindickung die Möglichkeit einer anderweitigen Weiterbehandlung der eingedickten Bestandteile der Trübe besteht. Insgesamt vereinfacht sich somit das Verfahren zur Gewässerentschlammung und dabei insbesondere zur Gewässerschlammaufbereitung, wobei Sande, die bisher infolge der mangelnden Trennmöglichkeit in der zweiten Stufe dem Abfall zugeführt wurden, nunmehr der wirtschaftlichen Verwertbarkeit zugeführt werden können.

In einer ersten Variante werden die eingedickten Bestandteile der Trübe direkt der weiteren Konditionierung oder einem Schlammbecken oder Schlammpolder zugeführt. Das Problem der wirtschaftlichen Verwertbarkeit der eingedickten Bestandteile der Trübe ist somit gelöst, wenn die eingedickten Bestandteile der Trübe der weiteren Konditionierung zugeführt werden. Ansonsten erfolgt bei der Zuführung zu einem Schlammbecken oder Schlammpolder eine Deponierung.

In einer zweiten, bevorzugten Variante werden die eingedickten Bestandteile der Trübe oberhalb einer bestimmten Größe zur Gewinnung von mechanisch vorentwässerten Bestandteilen abgesondert und von den Bestandteilen unterhalb dieser Größe getrennt. Die Trennung der Feststoffpartikel aus der dem Eindicker stammenden Suspension zur Gewinnung von mechanisch vorentwässerten Sanden und Schluffen kann dabei bei etwa 0,03 mm liegen, wobei die Trübe mit Bestandteilen unterhalb dieser Größe der direkten Konditionierung zugeführt werden kann.

In einer bevorzugten Weiterbildung dieser Variante werden die bei der Trennung anfallenden Überlaufmengen zur erneuten Behandlung der Eindickungsstufe rückgeführt. Durch diese Rückführung wird ein Kreislauf geschaffen, der verhindert, daß selbst bei einer Überbeschickung der zweiten Stufe eine permanente Trennung und Ausscheidung der Bestandteile möglich ist, ohne daß die weitere Behandlung mit Material aus der ersten Stufe belastet wird, so daß eine ansonsten drohende Verlandung vermieden wird.

Schließlich wird in einer weiteren Weiterbildung des Verfahrens vorgeschlagen, daß die eingedickten Bestandteile der Trübe bzw. die oberhalb der bestimmten Größe abgesonderten und mechanisch vorentwässerten Bestandteile direkt unter Umgehung der dritten Stufe zusammen mit dem Dickschlamm aus der dritten Stufe weiterverarbeitet werden. Auf diese Weise ist eine direkt bzw. indirekte Verwertung der eingedickten Bestandteile der Trübe möglich, ohne daß die dritte Stufe in den Verfahrensablauf mit einbezogen wird. Bei entsprechenden Gehalten an Siliziumdioxid in den Sanden und Schluffen können dabei die darin enthaltenen feinen Partikel bei der Herstellung von Gasbeton verwendet werden. Eine Verwendung als Rekultivierungsmaterial ist auch möglich.

Die Anlage zur Durchführung des Verfahrens ist ausgehend von einer Entnahmevorrichtung für den Schlamm, einem Klassierer zum Aussondern der Bestandteile oberhalb einer bestimmten Größe und Trennen nach anorganischen und organischen Bestandteilen, sowie einer dem Klassierer nachgeordneten Zyklonanlage zum Aussondern der anorganischen Bestandteile oberhalb einer Mindestgröße aus den verbliebenen Bestandteilen erfindungsgemäß gekennzeichnet durch einen der Zyklonanlage nachgeordneten Eindicker für die aus der Zyklonanlage anfallende anorganische und organische Trübe sowie durch eine Abführeinrichtung für die Weiterbehandlung der eingedickten Bestandteile. Der Eindicker ist dabei vorzugsweise ein Kompressionseindicker.

Ein in dieser Weise innerhalb der Gesamtanlage angeordneter Eindicker hat den Vorteil, daß mit ihm auf technisch einfache Weise die aus der Zyklonanlage in der zweiten Stufe anfallende anorganische und organische Trübe eingedickt und der Weiterbehandlung zugeführt werden kann, ohne daß es dazu eines großen zusätzlichen technischen Aufwandes bedarf.

Vorzugsweise ist der Zyklonanlage eine Entwässerungsmaschine nachgeordnet und der Eindicker weist einen Überlauf mit einer Zuführung (Leitung) für die leichten und nicht eingedickten organischen Bestandteile zur Entwässerungsmaschine bzw. zu einem dieser Entwässerungsmaschine vorgeschalteten Vorlagebecken auf. Durch den Überlauf können die leichten und nicht eingedickten bzw. eindickbaren organischen Bestandteile einer dritten Stufe in Form der Entwässerungsmaschine zugeführt werden, der gegebenenfalls ein Vorlagebecken vorgeschaltet sein kann.

In einer bevorzugten Ausführungsform wird zur Weiterbehandlung der im Eindicker eingedickten Bestandteile vorgeschlagen, daß dem Eindicker ein Hydrzyklon zur Gewinnung von mechanisch vorentwässerten Bestandteilen oberhalb einer bestimmten Größe für die aus dem Eindicker stammenden eingedickten Bestandteile der Trübe nachgeordnet ist. In diesem Hydrozyklon können die Feststoffpartikel aus der aus dem Eindicker stammenden Suspension zur Gewinnung von mechanisch vorentwässerten Sanden und Schluffen getrennt werden, wobei die vorgegebene Partikelgröße beipielsweise 0,03 mm betragen kann und wobei die Bestandteile die kleiner als diese Größe sind, der Entwässerungsmaschine bzw. einem dieser vorgeschalteten Vorlagebecken zugeführt werden können.

Schließlich wird mit der Erfindung vorgeschlagen, daß zwischen dem Hydrozyklon und dem Eindicker eine Rückführeinrichtung für im Hydrozyklon anfallende Überlaufmengen angeordnet ist. Durch die Rückführeinrichtung wird ein Kreislauf gebildet, der den Vorteil hat, daß selbst bei einer Überbeschickung des Zyklons der zweiten Stufe eine Trennung und Ausscheidung in dieser zweiten Stufe ermöglicht wird, ohne daß gegebenenfalls das Vorlagebecken vor der Entwässerungsmaschine der dritten Stufe belastet wird und verlandet.

Weitere Einzelheiten, Merkmale und Vorteile ergeben sich aus der nachfolgenden Beschreibung der zugehörigen Zeichnung, in der eine bevorzugte Ausführungsform einer erfindungsgemäß ausgebildeten Anlage zur Durchführung des Verfahrens zum Entschlammen von Gewässern schematisch dargestellt ist.

Die Anlage besteht zunächst aus einer Entnahmevorrichtung 1 für den Schlamm beispielsweise in Form eines Schneidkopfsaugbaggers. Diese Entnahmevorrichtung 1 ist mit einem Steinfangkorb 2 ausgestattet, der beispielsweise eine Maschenweite von 100 mm hat und somit größere Bestandteile als 100 mm auffängt.

Die Sediment-Suspension wird unter Zwischenschaltung eines Mengenreglers 3 für die Anlagenbeschickung einer ersten Trennstufe bestehend aus einem Siebzyklon 4, einer Waschtrommel 5 sowie einem Schwingklassierer 6 zugeführt. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon 4 erfolge eine Wasservorabscheidung und Vorabsiebung der Grobbestandteile oberhalb 6mm, so daß in einer Leitung 7 das vorabgeschiedene Wasser mit Feinbestandteilen unterhalb 6 mm (Feinschlamm) abgeführt und dem Schwingklassierer 6 zugeführt wird. Die im Siebzyklon 4 vorentwässerte Feststoffsuspension mit den Grobbestandteilen wird über eine Leitung 8 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand, etc.), wobei der Austrag aus der Waschtrommel 5 separat über die Leitung 9 (organische Bestandteile) und die Leitung 10 (anorganische Bestandteile) erfolgt. Eine weitere, jedoch nicht eingezeichnete Leitung führt von der Waschtrommel 5 zu dem Schwingklassierer 6, und zwar führt diese Leitung die Feinbestandteile unter 6 mm aus der Waschtrommel 5 ab und führt sie dem Schwingklassierer 6 zu.

Der Schwingklassierer 6 besteht aus vier Bahnen und zwar eine erste Bahn für die Wasservorabscheidung und die Vorabsiebung aus derLeitung 7, eine zweite Bahn für die anorganischen Bestandteile aus der Waschtrommel 5 über die Leitung 10, eine dritte Bahn für die organischen Bestandteile ebenfalls aus der Waschtrommel 5 über die Leitung 9 sowie eine vierte Bahn für die Feinbestandteile unter 6 mm aus der Waschtrommel 5 über die nicht eingezeichnete Leitung. Dabei können auch die erste und die vierte Bahn mit den Feinbestandteilen unter 6 mm zusammengefaßt werden.

Auf den Bahnen des Schwingklassierers 6 werden die Grobbestandteile mehrfach hin- und hergeleitet und von feinen organischen und mineralischen Partikeln gereinigt. Die gilt insbesondere für die organischen Grobbestandteile, um bei diesen Feinstteile auszuwaschen, die eventuell mit Schwermetallen kontaminiert sind.

Die so gereinigten organischen Bestandteile werden von ihrer entsprechenden Bahn des Schwingklassierers 6 einem Container 11 zugeführt, von wo aus das Holz und die Wurzeln der Verbrennung beispielsweise zur Energiegewinnung oder der Kompostierung zugeführt werden. Die anorganischen Grobbestandteile werden ebenfalls nach deren Reinigung einem Kieslager 12 zugeführt, das Steine größer als 6 mm beinhaltet. Auch der Kies im Kieslager 12 kann ebenso wie das Holz und die Wurzeln der Weiterverwertung zugeführt werden.

Mittels einer Förderpumpe 13 werden die anorganischen und organischen Feinbestandteile unterhalb einer Größe von 6 mm einer (Multi-) Zyklonanlage 14 in Suspension zugeführt. In dieser Zyklonanlage 14 soll eine Abscheidung des Sandes zwischen der Mindestgröße 0,063 und 6 mm erfolgen. Der Zyklonanlage 14 ist dabei ein Schwertrübesortierer 15 mit einer Frischwasser- oder Zentratwasser-Zufuhr 16 nachgeschaltet, die den gereinigten Sand über einen Schwingentwässerer 17 einem Sandlager 18 zuführt, das Sand mit einer Größe kleiner als 6 mm aufweist. Das Filtratwasser auf dem Schwingentwässerer 17 wird über eine Leitung 19 dem Schwingklassierer 6 rückgeführt.

Die feinen mineralischen Bestandteile unterhalb 0,063 mm, die in der Zyklonanlage 14 nicht ausgesondert werden können, sowie die organischen Feinbestandteile werden über Leitungen 20 (mineralische Trübe) und 21 (organische Trübe, Schlammwasser) einem Eindicker 22 zugeführt, der in dem dargestellten Ausführungsbeispiel ein Kompressions-Eindicker ist. Nach Einlauf der mineralischen und organischen Trübe breitet sich diese im Eindicker 22 aus. In einem Überlauf 23 des Eindickers 22 sammeln sich die leichten organischen Bestandteile, die über eine Leitung 24 einem Vorlagebecken 25 miteinem Homogenisierer 26 zugeführt werden. Die nicht durch den Überlauf 23 abgeführten Bestandteile, d.h. die Sande und Schluffe, setzen sich im Eindicker 22 ab und werden aus der unteren Kompressionsspitze mittels einer Pumpe 27 abgezogen und einem Hydrozyklon 28 zugeführt. In diesem Hydrozyklon 28 erfolgt eine Absonderung der Feststoffpartikel aus der dem Eindicker 22 stammenden Suspension zur Gewinnung von mechanisch vorentwässerten Sanden und Schluffen mit einer Partikelgroße größer als 0,03 mm. Die Sande und Schluffe werden über eine Leitung 29 einem Transportband 30 zugeführt und einem Lastkraftwagen 31 aufgegeben und der Deponierung, Kompostierung, Verbrennung oder dgl. zugeführt. Die Trübe mit Bestandteilen kleiner als 0,030 mm aus dem Hydrozyklon 28 wird über eine Leitung 32 dem Vorlagebecken 25 zugeführt.

Der Eindecker 22 trägt der Tatsache Rechnung, daß in der Zyklonanlage 14 eine Aussonderung der anorganischen Bestandteile (Sande) nicht in optimaler Weise erfolgt. Die Praxis zeigt nämlich, daß das Aufströmwasser aus dem Düsenboden die relativ leichten mineralischen Bestandteile zum Überlauf der Zyklonanlage 14 treibt, was zur Folge hat, daß Sandteilchen, die größer als 0,063 mm sind, mit herausgerissen und über die Leitung 20 abtransportiert werden, ohne daß sie - wie vorgesehen - dem Sandlager 18 zugeführt werden. Durch den Eindicker 22 und den Hydrozyklon 28 werden diese verbliebenen mineralischen Bestandteile auf diese Weise nachträglich ausgesondert und der Weiterverarbeitung zugeführt, ohne daß sie in die weiteren Verfahrensabschnitte gelangen, die mit dem Vorlagebecken 25 beginnen.

In diesem Vorlagebecken 25 befinden soll somit ausschließlich Teilchen, die kleiner als 0,063 mm sind. Von dort aus erfolgt der Weitertransport der Trübe mittels einer Förderpumpe 33 zu einer Entwässerungsmaschine in Form einer Zentrifuge 34, die die dritte Trennstufe nach der Zyklonanlage 14 als zweite Trennstufe bildet. Diese dritte Trennstufe nach der Zyklonanlage 14 ist nicht unbedingt notwendig, d.h. es genügen grundsätzlich die ersten beiden Trennstufen zusammen mit dem Eindicker 22, um den gewünschten Erfolg herbeiführen zu können.

In die Leitung 35 zwischen dem Vorlagebecken 25 und der Zentrifuge 34 ist eine Fällungsstation 36 geschaltet, die die in dem Wasser gelösten Phosphate durch Zugabe von Fe(II)Sulfat oder Fe(III)Chloridsulfat ausfällen und in sedimentationsfähige Feststoffe überführen sollen.

Weiterhin ist in die Leitung 35 zwischen dem Vorlagebecken 25 und der Zentrigue 34 eine Neutralisationsstation 37 gechaltet, die durch Zugabe beispielsweise von Kalkmilch das Wasser entsäuern und damit neutralisation und zugleich eine Sedimentationshilfe geben soll. Auch hier erfolgt eine Ausfällung zu einem sedimentationsfähigen Feststoff.

In der Zentrifuge 34 erfolgt eine Entwässerung der mineralischen und organischen Trübe sowie der Fällungsstoffe aus den Stationen 28 und 29. Der gewonnene Dickschlamm wird beispielsweise über das Transportband 30 dem Lastkraftwagen 31 aufgegeben und entsprechend dem Schlamm und dem Schluff aus dem Hydrozyklon 28 der Deponierung, Kompostierung, Verbrennung oder dgl. zugeführt.

Das Ablaufwasser (Zentrat) aus der Zentrifuge 34 wird schließlich einem Lamellenklärer 38 über die Leitung 39 zugeführt, dem ein Flokulator 40 vorgeschaltet ist. In die Leitung 39 ist darüber hinaus eine Gegenflockungsstation 41 geschaltet. Das im Lamellenklärer 38 anfallende Schlammkonzentrat 42 wird über eine Leitung 43 der Leitung 35 zur Zentrifuge 34 rückgeführt, so daß das Schlammkonzentrat erneut die dritte Stufe durchlaufen und als Zentrifugat mittels der Zentrifuge abgeschieden werden kann.

Das Ablaufwaser aus dem Lamellenklärer 38 wird nach Passieren eines Filters 44 in einen Vorflutergraben 45 eingeleitet, der eine Ölsperre 46 haben kann. Von dort aus erfolgt die Rückführung des Ablaufwassers zurück in das Gewässer. Der Filter 44 soll das Ablaufwasser von Schwebepartikeln und Schwimmstoffen befreien, wobei Sandfilter und Festkörperfilter Verwendung finden können. Dadurch wird der Chemische Sauerstoffbedarf (CSB) erheblich verringert.

Die beschriebene Anlage kann stationär aufgebaut sein. Sie kann aber auch mobil sein, d.h. sie kann zu ihrem jeweiligen Einsatzort transportiert werden. Die Anlage kann dabei eine einzige kompakte Vorrichtung sein, in der alle Elemente enthalten sind.

Bezugszeichenliste

  1 Entnahmevorrichtung
  2 Steinfangkorb
  3 Mengenregler
  4 Siebzyklon
  5 Waschtrommel
  6 Schwingklassierer
  7 Leitung
  8 Leitung
  9 Leitung
10 Leitung
11 Container
12 Kieslager
13 Förderpumpe
14 Zyklonanlage
15 Schwertrübesortierer
16 Frischwasser- oder Zentratwasserzufuhr
17 Schwingentwässerer
18 Sandlager
19 Leitung
20 Leitung
21 Leitung
22 Eindicker
23 Überlauf
24 Leitung
25 Vorlagebecken
26 Homogenisierer
27 Pumpe
28 Hydrozyklon
29 Leitung
30 Transportband
31 Lastkraftwagen
32 Leitung
33 Förderpumpe
34 Zentrifuge
35 Leitung
36 Fällungsstation
37 Neutralisationsstation
38 Lamellenklärer
39 Leitung
40 Flokulator
41 Gegenflockungsstation
42 Schlammkonzentrat
43 Leitung
44 Filter
45 Vorfluter
46 Ölsperre

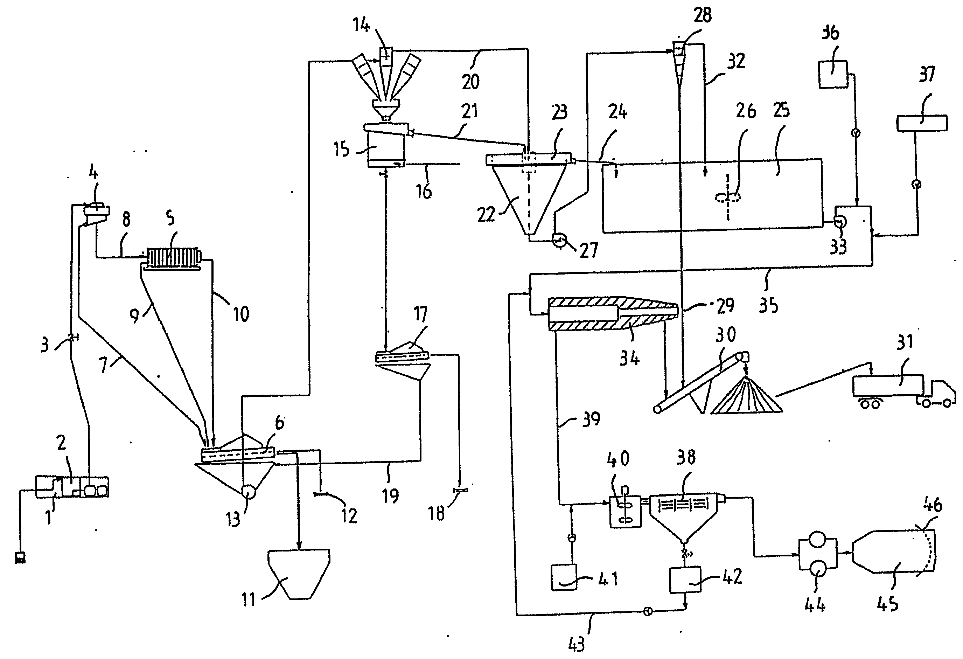

**Patentansprüche**

1. Verfahren zum Entschlammen von Gewässern und/oder Aufbereiten von derartigen Gewässerschlämmen, bei dem die im Schlamm enthaltenen anorganischen (Steine, Kies, Sand etc.) und organischen (Holz, Wurzeln etc.) Bestandteile voneinander separiert werden, wobei zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden, wobei anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden und wobei schließlich in einer dritten Stufe die anorganische und organische Trübe der dann übrig gebliebenen Bestandteile entwässert und dabei der gewonnene Dickschlamm und das Ablaufwasser weiterverarbeitet bzw. abgeführt werden, dadurch gekennzeichnet, daß die zwischen der zweiten und der dritten Stufe anfallende anorganische und organische Trübe eingedickt wird, wobei die leichten und nicht eingedickten organischen Bestandteile der Trübe gegebenenfalls unter Zwischenlagerung direkt der dritten Stufe zugeführt werden, während die eingedickten Bestandteile der Trübe anderweitig weiterbehandelt werden.

2. Verfahren nach Anspruch 1, dadurch gekennzeichnet, daß die eingedickten Bestandteile der Trübe direkt der weiteren Konditionierung oder einem Schlammbecken oder Schlammpolder zugeführt werden.

3. Verfahren nach Anspruch 1, dadurch gekennzeichnet, daß die eingedickten Bestandteile der Trübe oberhalb einer bestimmten Größe zur Gewinnung von mechanisch vorentwässerten Bestandteilen abgesondert und von den Bestandteilen unterhalb dieser Größe getrennt werden.

4. Verfahren nach Anspruch 3, dadurch gekennzeichnet, daß die bei der Trennung anfallenden Überlaufmengen zur erneuten Behandlung der Eindickungsstufe rückgeführt werden.

5. Verfahren nach Anspruch 1, 3 oder 4, dadurch gekennzeichnet, daß die eingedickten Bestandteile der Trübe bzw. die oberhalb der bestimmten Größe abgesonderten und mechanisch vorentwässerten Bestandteile direkt unter Umgehung der dritten Stufe zusammen mit dem Dickschlamm aus der dritten Stufe weiterverarbeitet werden.

6. Anlage zur Durchführung des Verfahrens nach einem der Ansprüche 1 bis 5, mit einer Entnahmevorrichtung (1) für den Schlamm, mit einem Klassierer (6) zum Aussondern der Bestandteile oberhalb einer bestimmten Größe und Trennen nach anorganischen und organischen Bestandteilen, mit einer dem Klassierer (6) nachgeordneten Zyklonanlage (14) zum Aussondern der anorganischen Bestandteile oberhalb einer Mindestgröße aus den verbliebenen Bestandteilen, sowie mit einer der Zyklonanlage (14) nachgeordneten Zentrifuge (34) zum Entwässern der anorganischen und organischen Trübe der übrig gebliebenen Bestandteile und Überführen in Dickschlamm, gekennzeichnet durch einen der Zyklonanlage (14) nachgordneten Eindicker (22) für die aus der Zyklonanlage (14) anfallende anorganische und organische Trübe sowie durch eine Abführeinrichtung für die Weiterbehandlung der eingedickten Bestandteile.

7. Anlage nach Anspruch 6, dadurch gekennzeichnet, daß der Eindicker (22) ein Kompressions-Eindicker ist.

8. Anlage nach Anspruch 6 oder 7, dadurch gekennzeichnet, daß der Eindicker (22) einen Überlauf (23) mit einer Zuführung (Leitung 24) für die leichten und nicht eingedickten organischen Bestandteile zur Zentrifuge (34) bzw. zu einem dieser Zentrifuge (34) vorgeschalteten Vorlagebecken (25) aufweist.

9. Anlage nach einem der Ansprüche 6 bis 8, dadurch gekennzeichnet, daß dem Eindicker (22) ein Hydrozyklon (28) zur Gewinnung von mechanisch vorentwässerten Bestandteilen oberhalb einer bestimmten Größe für die aus dem Eindicker (22) stammenden eingedickten Bestandteile der Trübe nachgeordnet ist.

10. Anlage nach Anspruch 9, dadurch gekennzeichnet, daß zwischen dem Hydrozyklon (28) und dem Eindicker (22) eine Rückführeinrichtung für im Hydrozyklon (28) anfallende Überlaufmengen angeordnet ist.

**Claims**

1. A process for removing sludge from bodies of water and/or preparing watery sludges of this kind, inorganic constituents of the sludge, such as stones, gravel, sand or the like, and organic constituents of the sludge, such as wood, roots or the like, being separated from one another, constitents above a particular size being separated out in a first step separately by inorganic and organic constituents, purified and supplied to further processing, whereafter in a second step the inorganic constituents above a minimum size are separated out from the residue of the first step, purified and also supplied to further processing, whereafter in a third step the inorganic and organic turbidities of the remaining constituents are dewatered and the resulting thick sludge and the outflowing water are further processed or removed, characterised in that the inorganic and organic turbidities arising between the second and third steps are concentrated, the light and non-concentrated organic constituents of the turbidity being supplied directly to the third step with or without intermediate storage while the concentrated constituents of the turbidity are given alternative further treatment.

2. A process according to claim 1, characterised in that the concentrated constituents of the turbidity are supplied directly to further conditioning or to a sludge basin or sewage farm.

3. A process according to claim 1, characterised in that the concentrated consituents of the turbidity above a particular size are separated out to yield mechanically predewatered constituents and are separated from the constituents below the last-mentioned size.

4. A process according to claim 3, characterised in that the overflow quantities arising in separation are returned to the concentrating step for further treatment.

5. A process according to claim 1 or 3 or 4, characterised in that the concentrated constituents of the turbidity and the constituents which are separated out above the particular size and which have been mechanically predewatered bypass the third step and are further processed together with the thick sludge therefrom.

6. A plant for performing the process according to any of claims 1–5 and comprising: a sludge extractor (1); a classifier (6) for separating out the constituents above a particular size and separating them on the basis of inorganic and organic constituents; a cyclone facility (14) which is disposed after the classifier (6) for separating out from the residual constituents the inorganic constituents above a minimum size; and a centrifuge (34) which is disposed downstream of the cyclone facility (14) for dewatering the inorganic and organic turbidities of the residues and converting them into thick sludge, characterised by: a concentrator (22) disposed after the cyclone facility (14) to treat the inorganic and organic turbidities yielded thereby; and means for removing the concentrated constituents for further treatment.

7. A plant according to claim 6, characterised in that the concentrator (22) is a compression concentrator.

8. A plant according to claim 6 or 7, charcterised in that the concentrator (22) has an overflow (23) with a feed (line 24) for the light and unconcentrated organic constituents to the centrifuge (34) or to a preliminary basin (25) preceding the centrifuge (34).

9. A plant according to any of claims 6–8, characterised in that a hydrocyclone (28) for producing mechanically predewatered constituents above a predetermined size is disposed after the concentrator (22) to treat the concentrated turbidity constituents delivered thereby.

10. A plant according to claim 9, characterised in that means for returning overflow quantities arising in the hydrocyclone (28) are disposed between the same and the concentrator (22).

## Revendications

1. Procédé pour retirer les boues d'eaux brutes et/ou traiter de telles boues d'eaux brutes, dans lequel on sépare entre eux les composants non organiques (pierres, gravier, sable, etc...) et les composants organiques (bois, racines, etc...) contenus dans les boues, les composants dépassant une taille déterminée étant d'abord, au cours d'une première étape, séparés des boues, triés en composants non organiques et composants organiques, nettoyés et envoyés à une utilisation ultérieure, les composants non organiques dépassant une taille minimale étant ensuite, au cours d'une deuxième étape, séparés des composants restants, nettoyés et envoyés également à une utilisation ultérieure, le liquide trouble non organique et organique des composants restants étant enfin, au cours d'une troisième étape, déshydraté et les boues épaisses obtenues ainsi que l'eau d'écoulement étant traités ou évacués caractérisé en ce qu'on épaissit le liquide trouble non organique et organique produit entre la deuxième étape et la troisième étape, les composants organiques légers et non épaissis du liquide trouble étant, le cas échéant avec un stockage intermédiaire, envoyés directement à la troisième étape, tandis que les composants épaissis du liquide trouble sont traités d'une autre manière.

2. Procédé selon la revendication 1, caractérisé en ce qu'on envoie les composants épaissis du liquide trouble directement à une autre opération de conditionnement ou à un bassin à boues ou à un champ à boues.

3. Procédé selon la revendication 1, caractérisé en ce qu'on trie les composants épaissis du liquide trouble dépassant une taille déterminée pour obtenir des composants prédéshydratés par voie mécanique et on les sépare des composants inférieurs à cette taille.

4. Procédé selon la revendication 3, caractérisé en ce qu'on renvoie les débits de trop-plein produits pendant la séparation à l'étape d'épaississement pour un nouveau traitement.

5. Procédé selon la revendication 1, 3 ou 4, caractérisé en ce que les composants épaissis du liquide trouble ainsi que les composants triés dépassant la taille prédéterminée et prédéshydratés par voie mécanique sont soumis directement à un traitement ultérieur, conjointement avec les boues épaissies provenant du troisième étage, en contournant ce troisième étage.

6. Installation pour la mise en pratique du procédé selon l'une des revendications 1 à 5, comportant un dispositif d'extraction des boues (1), un trieur (6) pour trier les composants dépassant une taille prédéterminée et les séparer en composants non organiques et composants organiques, un séparateur à cyclone (14) disposé après le trieur (6) pour séparer des composants restants les composants non organiques dépassant une taille minimale, ainsi qu'une centrifugeuse (34) disposée après le séparateur à cyclone (14) pour déshydrater le liquide trouble non organique et organique des composants restants et le transformer en boues épaisses, caractérisée par un épaississeur (22) disposé après le séparateur à cyclone (14) pour le liquide trouble non organique et organique provenant du séparateur à cyclone (14) ainsi que par un dispositif d'évacuation pour le traitement ultérieur des composants épaissis.

7. Installation selon la revendication 6, caractérisée en ce que l'épaisseur (22) est un épaississeur à compression.

8. Installation selon la revendication 6 ou 7, caractérisée en ce que l'épaississeur (22) comporte un trop-plein (23) avec une amenée (conduite 24) des composants organiques légers et non épaissis à la centrifugeuse (34) ainsi qu'à un bassin collecteur (25) disposé avant cette centrifugeuse (34).

9. Installation selon l'une des revendications 6 à 8, caractérisée en ce qu'un hydrocyclone (28) est disposé après l'épaississeur (22) pour obtenir des composants déshydratés par voie mécanique et dépassant une taille déterminée avec les composants épaissis du liquide trouble provenant de l'épaississeur (22).

10. Installation selon la revendication 9, caractérisée en ce qu'un dispositif de recyclage des débits de trop-plein provenant de l'hydrocyclone (28) est disposé entre l'hydrocyclone (28) et l'épaississeur (22).